(19) Europäisches Patentamt
European Patent Office
Office européen des brevets

(11) **EP 4 564 976 A1**

(12) **EUROPEAN PATENT APPLICATION**
published in accordance with Art. 153(4) EPC

(43) Date of publication:
04.06.2025 Bulletin 2025/23

(21) Application number: 23845500.0

(22) Date of filing: 24.07.2023

(51) International Patent Classification (IPC):
*H04W 72/12* (2023.01)    *H04W 72/04* (2023.01)

(52) Cooperative Patent Classification (CPC):
H04W 72/04; H04W 72/12; H04W 72/1268

(86) International application number:
PCT/CN2023/108899

(87) International publication number:
WO 2024/022290 (01.02.2024 Gazette 2024/05)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.07.2022 CN 202210899927

(71) Applicant: Vivo Mobile Communication Co., Ltd.
Dongguan, Guangdong 523863 (CN)

(72) Inventors:
• YANG, Yuming
  Dongguan, Guangdong 523863 (CN)
• LIU, Siqi
  Dongguan, Guangdong 523863 (CN)
• JI, Zichao
  Dongguan, Guangdong 523863 (CN)
• WANG, Huan
  Dongguan, Guangdong 523863 (CN)

(74) Representative: Germain Maureau
12, rue Boileau
69006 Lyon (FR)

(54) **RESOURCE SELECTION METHOD, AND TERMINAL**

(57) Embodiments of this application disclose a resource selection method and a terminal, and belong to the field of communication technologies. The resource selection method in the embodiments of this application includes: performing, by a first terminal, resource selection based on first information, where the first terminal supports an LTE access technology and/or an NR access technology, and the first information includes at least one of the following: second information, where the second information includes LTE SCI sensing information of the LTE access technology or resource reservation information obtained after LTE SCI sensing information is processed; a coordination information request received by the first terminal; and resource pool configuration information.

200

A first terminal performs resource selection based on first information, where the first terminal supports an LTE access technology and/or an NR access technology, and the first information includes at least one of the following: second information, where the second information includes LTE SCI sensing information of the LTE access technology or resource reservation information obtained after LTE SCI sensing information is processed; a coordination information request received by the first terminal; and resource pool configuration information ∼ S202

FIG. 2

EP 4 564 976 A1

## Description

## CROSS-REFERENCE TO RELATED APPLICATIONS

The present invention claims priority to Chinese Patent Application No. 202210899927.8, filed with the China National Intellectual Property Administration on July 28, 2022 and entitled "RESOURCE SELECTION METHOD AND TERMINAL", which is incorporated herein by reference in its entirety.

## TECHNICAL FIELD

This application belongs to the field of communication technologies, and specifically relates to a resource selection method and a terminal.

## BACKGROUND

A long term evolution (Long Term Evolution, LTE) system supports sidelink (sidelink) from Release 12, to perform direct data transmission between terminals (User Equipment, UE) without using a network device. The LTE sidelink is based on broadcast for communication, and is not applicable to other more advanced V2X services although the LTE sidelink can be used to support basic security-type communication of vehicle to everything (vehicle to everything, V2X). A 5th-generation mobile communication technology (5th Generation Mobile Communication Technology, 5G) new radio (New Radio, NR) system supports a more advanced sidelink transmission design, such as unicast, multicast, or broadcast, so as to support a more comprehensive range of service types.

In a case that a quantity of new radio sidelink terminals (NR sidelink UE) is increasing and a quantity of long term evolution sidelink terminals (LTE sidelink UE) is decreasing, utilization of frequency bands divided for the LTE sidelink UE is relatively low. To improve utilization of these resources, some methods are proposed, so that the NR sidelink UE can coexist with the LTE sidelink UE on these frequency bands. However, in a case that the NR sidelink UE coexists with the LTE sidelink UE on a frequency band, how the terminal selects a proper resource is a technical problem that needs to be urgently resolved in the related art.

## SUMMARY

Embodiments of this application provide a resource selection method and a terminal, to resolve a problem that a terminal cannot select a proper resource in a case that an NR sidelink UE coexists with an LTE sidelink UE on a frequency band.

According to a first aspect, a resource selection method is provided, including: performing, by a first terminal, resource selection based on first information, where the first terminal supports an LTE access technology and/or an NR access technology, and the first information includes at least one of the following: second information, where the second information includes LTE SCI sensing information of the LTE access technology or resource reservation information obtained after LTE SCI sensing information is processed; a coordination information request received by the first terminal; and resource pool configuration information.

According to a second aspect, a resource selection method is provided, including: performing, by a second terminal, resource selection based on received coordination information, where the second terminal supports an NR access technology, but does not support an LTE access technology, or the second terminal supports both an NR access technology and an LTE access technology.

According to a third aspect, a resource selection apparatus is provided, applied to a first terminal and including: a communication module, configured to perform resource selection based on first information, where the first terminal supports an LTE access technology and/or an NR access technology, and the first information includes at least one of the following: second information, where the second information includes LTE SCI sensing information of the LTE access technology or resource reservation information obtained after LTE SCI sensing information is processed; a coordination information request received by the first terminal; and resource pool configuration information.

According to a fourth aspect, a resource selection apparatus is provided, applied to a second terminal and including: a communication module, configured to perform resource selection based on received coordination information, where the second terminal supports an NR access technology, but does not support an LTE access technology, or the second terminal supports both an NR access technology and an LTE access technology.

According to a fifth aspect, a terminal is provided, where the terminal includes a processor and a memory, the memory stores a program or instructions capable of running on the processor, and the program or the instructions is or are executed by the processor to implement the steps of the method according to the first aspect or the second aspect.

According to a sixth aspect, a terminal is provided, including a processor and a communication interface, where the communication interface is configured to perform resource selection based on first information, where the first terminal supports an LTE access technology and/or an NR access technology, and the first information includes at least one of the following: second information, where the second information includes LTE SCI sensing information of the LTE access technology or resource reservation information obtained after LTE SCI sensing information is processed; a coordination information request received by the first terminal; and resource pool configuration information. Alternatively, the communication interface is configured to perform resource selection based on received coordination information, where the second terminal supports an NR access technology, but does not support an LTE access technology, or the second terminal supports both an NR access technology and an LTE access technology.

According to a seventh aspect, a resource selection system is provided, including a first terminal and a second terminal, where the first terminal may be configured to perform the steps of the method according to the first aspect, and the second terminal may be configured to perform the steps of the method according to the second aspect.

According to an eighth aspect, a readable storage medium is provided, where a program or instructions is or are stored in the readable storage medium, and the program or the instructions is or are executed by a processor to implement the steps of the method according to the first aspect or the steps of the method according to the second aspect.

According to a ninth aspect, a chip is provided, where the chip includes a processor and a communication interface, the communication interface is coupled to the processor, and the processor is configured to run a program or instructions to implement the steps of the method according to the first aspect or implement the steps of the method according to the second aspect.

According to a tenth aspect, a computer program/program product is provided, where the computer program/program product is stored in a storage medium, and the computer program/program product is executed by at least one processor to implement the steps of the method according to the first aspect or the steps of the method according to the second aspect.

In the embodiments of this application, the first terminal that supports the LTE access technology and/or the NR access technology performs resource selection based on the first information, and the first information includes at least one of the following: the second information, where the second information includes the LTE SCI sensing information of the LTE access technology or the resource reservation information obtained after the LTE SCI sensing information is processed; the coordination information request received by the first terminal; and the resource pool configuration information. In the embodiments of this application, a problem that a terminal cannot select a proper resource in a case that an NR sidelink UE coexists with an LTE sidelink UE on a frequency band. This helps the terminal select a proper resource for sidelink transmission, and improves resource utilization.

## BRIEF DESCRIPTION OF DRAWINGS

FIG. 1 is a schematic diagram of a wireless communication system according to an embodiment of this application;

FIG. 2 is a schematic flowchart of a resource selection method according to an embodiment of this application;
FIG. 3 is a schematic diagram of a specific application of a resource selection method according to an embodiment of this application;
FIG. 4 is a schematic diagram of a time duration relationship in a resource selection method according to an embodiment of this application;
FIG. 5 is a schematic diagram of sending a coordination information request/coordination information by a terminal in a resource selection method according to an embodiment of this application;
FIG. 6 is a schematic diagram of a resource pool in a resource selection method according to an embodiment of this application;
FIG. 7 is a schematic flowchart of a resource selection method according to an embodiment of this application;
FIG. 8 is a schematic diagram of a structure of a resource selection apparatus according to an embodiment of this application;
FIG. 9 is a schematic diagram of a structure of a resource selection apparatus according to an embodiment of this application;
FIG. 10 is a schematic diagram of a structure of a communication device according to an embodiment of this application; and
FIG. 11 is a schematic diagram of a structure of a terminal according to an embodiment of this application.

## DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

In the specification and claims of this application, the terms "first" and "second" are used to distinguish between similar objects, but are unnecessarily used to describe a specific sequence or order. It should be understood that terms used in such a way is exchangeable in a proper case, so that the embodiments of this application described herein can be implemented in an order other than the order shown or described herein. In addition, objects distinguished by "first" and "second" are generally of one type, and a quantity of objects is not limited. For example, there may be one or more first objects. In addition, "and/or" in this specification and the claims represents at least one of the connected objects, and the character "/" generally represents an "or" relationship between the associated objects.

It should be noted that the technology described in the embodiments of this application is not limited to a long term evolution (Long Term Evolution, LTE)/LTE-Advanced (LTE-Advanced, LTE-A) system, and may be further applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and another system. The terms "system" and "network" in the embodiments of this application are usually used interchangeably. The described technology may be used in the above-mentioned system and radio technology, and may also be used in another system and radio technology. In the following descriptions, a new radio (New Radio, NR) system is described for the purpose of illustration, and the term "NR" is used in most of the following descriptions. However, these technologies may also be applied to an application other than the NR system application, such as a 6th-generation (6th Generation, 6G) communication system.

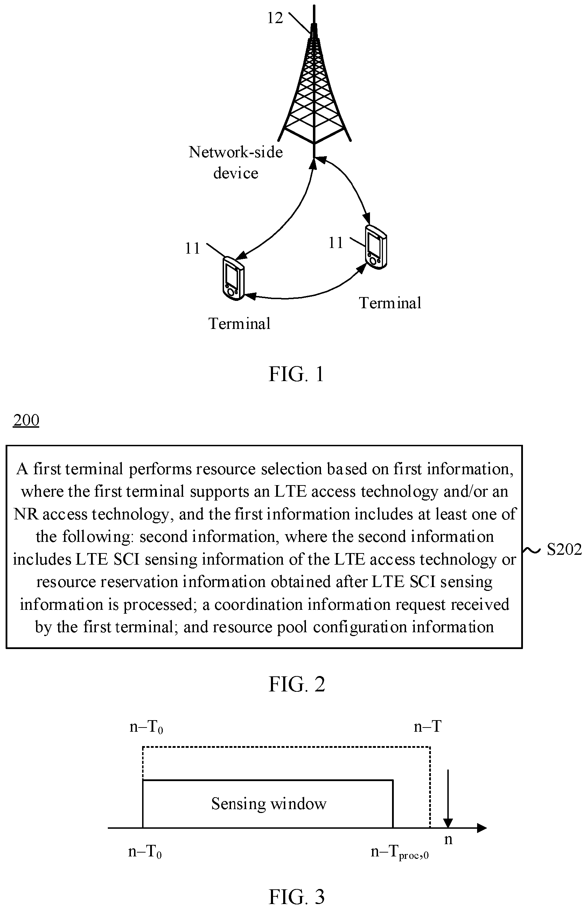

FIG. 1 is a block diagram of a wireless communication system that can be applied to an embodiment of this application. The wireless communication system includes a terminal 11 and a network-side device 12. The terminal 11 may be a terminal-side device such as a mobile phone, a tablet computer (Tablet Personal Computer), a laptop computer (Laptop Computer) (or referred to as a notebook computer), a personal digital assistant (Personal Digital Assistant, PDA), a palmtop computer, a netbook, a ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), a vehicle user equipment (Vehicle User Equipment, VUE), a pedestrian user equipment (Pedestrian User Equipment, PUE), a smart home device (a home device with a wireless communication function, such as a refrigerator, a television, a washing machine, or a furniture), a game console, a personal computer (personal computer, PC), a teller machine, or a self-service machine. The wearable device includes: a smartwatch, a smart band, a smart headset, smart glasses, smart jewelry (a smart bracelet, a smart bangle, a smart ring, a smart necklace, a smart leglet, a smart anklet, and the like), a smart wristband, smart clothing, and the like. It should be noted that a specific type of the terminal 11 is not limited in this embodiment of this application. The network-side device 12 may include an access network device or a core network device, and the access network device may also be referred to as a radio access network device, a radio access network (Radio Access Network, RAN), a radio access network function, or a radio access network unit. The access network device may include a base station, a wireless local area network (Wireless Local Area Network, WLAN) access point, a WiFi node, or the like. The base station may be referred to as a NodeB, an evolved NodeB (evolved NodeB, eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or another suitable term in the field. Provided that a same technical effect is achieved, the base station is not limited to a specific technical term. It should be noted that in this embodiment of this application, a base station in an NR system is only used as an example for description, and a specific type of the base station is not limited.

With reference to the accompanying drawings, the following describes in detail, by using some embodiments and application scenarios thereof, a resource selection method provided in the embodiments of this application.

As shown in FIG. 2, an embodiment of this application provides a resource selection method 200. The method may be performed by a first terminal. In other words, the method may be performed by software or hardware installed on the first terminal. The method includes the following step:

S202: The first terminal performs resource selection based on first information, where the first terminal supports an LTE access technology and/or an NR access technology, and the first information includes at least one of the following: second information, where the second information includes LTE sidelink control information (sidelink Control Information, SCI) sensing information of the LTE access technology or resource reservation information obtained after LTE SCI sensing information is processed; a coordination information request received by the first terminal; and resource pool configuration information.

Resource selection mentioned in this embodiment of this application may include at least one of the following: resource sensing, resource exclusion, resource selection, and resource reselection.

In an example, the first terminal performs resource selection based on the first information, the first information includes the second information, and the second information includes the LTE SCI sensing information or the resource reservation information. In this example, the first terminal supports the LTE access technology and the NR access technology, or the first terminal includes an LTE module and an NR module. The LTE module performs communication by using the LTE access technology, and the NR module performs communication by using the NR access technology. The subsequent descriptions are similar. An LTE SCI format (format) is different from an NR SCI format. Therefore, if the NR module performs resource selection based on only resource reservation information sensed by the NR module, a reserved resource of the LTE access technology cannot be avoided. This may affect resource allocation. In this example, resource selection is performed based on the LTE SCI sensing information or the resource reservation information of LTE, thereby avoiding affecting resource allocation. In addition, the following may be further considered: impact caused, on resource allocation, by a difference between related processing time of information of the LTE module and related processing time of sensing information of the NR module, and time for transferring information between the modules. For details, refer to detailed descriptions in the subsequent Part 1.

In another example, the first terminal performs resource selection based on the first information, the first information includes the coordination information request received by the first terminal, and the coordination information request may indicate at least one piece of the following content: a transmit end requests reserved resource information of LTE, a recommended resource of the transmit end, a non-recommended resource of the transmit end, or a resource conflict indication. The above-mentioned transmit end is a terminal that sends the coordination information request. In this example, because the first terminal supports the LTE access technology and the NR access technology, the first terminal may receive the coordination information request (for example, request signaling) by using the NR access technology, and the first terminal may further send coordination information (for example, coordination signaling) to a second terminal. In this example, by using the coordination information request, the second terminal may obtain the resource reservation information of LTE (which may be indicated in the coordination information) sensed by the first terminal, or obtain the recommended resource, the non-recommended resource, or the resource conflict indication (which may be indicated in the coordination information) determined after the first terminal considers the resource reservation information of LTE, so that the second terminal avoids a conflict with a resource of LTE. The second terminal may support the NR access technology, but does not support the LTE access technology, or the second terminal supports both the NR access technology and the LTE access technology.

In still another example, the first terminal performs resource selection based on the first information, the first information includes the resource pool configuration information, and the resource pool configuration information may be used to configure an NR sidelink resource pool. In this example, the resource pool may be partitioned to further avoid a resource conflict and maximize resource utilization. In this example, the first terminal may support only the NR access technology (that is, does not support the LTE access technology), or may support both the LTE access technology and the NR access technology.

In another example, the first terminal may alternatively perform resource selection based on at least two of the second information, the coordination information request, and the resource pool configuration information.

According to the resource selection method provided in this embodiment of this application, the first terminal that supports the LTE access technology and/or the NR access technology performs resource selection based on the first information, and the first information includes at least one of the following: the second information, where the second information includes the LTE SCI sensing information of the LTE access technology or the resource reservation information obtained after the LTE SCI sensing information is processed; the coordination information request received by the first terminal; and the resource pool configuration information. In this embodiment of this application, a problem that a terminal cannot select a proper resource in a case that an NR sidelink UE coexists with an LTE sidelink UE on a frequency band. This helps the terminal select a proper resource for sidelink transmission, and improves resource utilization.

The above-mentioned first information may include at least one of the second information, the coordination information request, and the resource pool configuration information. The following is described in detail in three parts. Part 1 mainly describes a solution related to the second information. Part 2 mainly describes a solution related to the coordination information request and the coordination information. Part 3 mainly describes a solution related to the resource pool configuration information.

Part 1

When a dual-mode terminal (for example, the first terminal) performs resource selection by sensing the resource reservation information of an LTE terminal by using the LTE module, because the second information sensed by the LTE module needs to be transmitted to the NR module for processing, and the NR module even needs to trigger the LTE module to transmit the second information, processing time of this process is different from time in which the NR module processes only resource sensing information. Therefore, in a resource selection process, impact of this time on the entire process may be considered in Part 1.

Optionally, in an embodiment, the first information includes the second information, and in a case that the first terminal performs full sensing (full sensing) or partial sensing (partial sensing) by using the LTE access technology, the first terminal (for example, the NR module) supports use of second information before an (n-T) moment, or the first terminal may use second information before an (n-T) moment. For example, for the first terminal, a sensing window of a reserved resource of LTE is [n-$T_0$, n-T], where

n is at least one of the following: a moment at which a medium access control (Medium Access Control, MAC) layer triggers resource allocation using the NR access technology, a moment at which a data packet arrives, a moment at which transmission of the second information (by the LTE module) is triggered, a moment at which the second information is expected to be received, a moment at which processing of sensed second information by using the LTE access technology is notified, a moment at which resource re-evaluation or preemption is triggered, and a moment at which the 1st resource in a candidate resource set is located.

T is time duration for transmitting and/or processing the second information. For example, when T is only the time duration for transmitting the second information, the LTE module may transmit original information obtained after LTE SCI is decoded, for example, complete information such as a priority and a reference signal received power (Reference Signal Received Power, RSRP) measurement value of a reserved resource indicated in the LTE SCI. When T further includes the time duration for processing the second information, in this case, the LTE module performs specific processing on the original information obtained after the LTE SCI is decoded, for example, removes unrelated information such as modulation and coding scheme (Modulation and Coding Scheme, MCS), and retains only the resource reservation information and/or the RSRP measurement value.

In this embodiment, for example, n is the moment at which resource allocation using the NR access technology is triggered, with the purpose of defining the following: The second information that can be used when the first terminal starts the resource selection process may be only the second information arriving before (n-T) moment, and LTE timeslots in these second information also need to fall before (n-T) moment. For another example, n is the moment at which transmission of the second information (by the LTE module) is triggered, with the purpose of defining the following: Information that can be obtained when the first terminal triggers the LTE module to transfer the second information is the second information before (n-T) moment. For another example, n is the moment at which the 1st resource in the candidate resource set is located, with the purpose of defining the following: When the first terminal starts resource selection only before the moment at which the 1st resource in the candidate resource set is located, the reservation information on the LTE access technology side that can be used by the first terminal may be only resource reservation information arriving before (n-T) moment, or resource reservation information that is indicated in the LTE SCI and that is sensed before (n-T) moment.

Optionally, in an embodiment, the first information includes the second information, and the method further includes: The first terminal triggers resource re-evaluation or preemption before X timeslots of a resource r, where the resource r is a resource that is determined by the MAC layer for resource re-evaluation or preemption check. X includes at least one piece of the following content: time duration (time duration) for triggering transmission of the second information (by the LTE module); time duration for processing the second information; and time duration for transmitting the second information.

The resource reservation information of LTE needs to be considered when the first terminal performs resource re-evaluation or preemption check. Therefore, before resource re-evaluation or preemption check, the first terminal may obtain new resource reservation information of LTE (namely, the second information) by using the LTE module. Therefore, this process needs to be considered when processing time is reserved. Processing time of this process may be longer than that on the NR side. Therefore, a moment at which the first terminal triggers resource re-evaluation or preemption check may need to be earlier than that in a case that only NR is considered, to reserve time for triggering as well as receiving and processing the resource reservation information of LTE transmitted by the LTE module.

Optionally, in an embodiment, the first information includes the second information, and in a case that the first terminal performs partial sensing (partial sensing) by using the NR access technology, one of the following is met:

(1) The first terminal uses all received second information. This example is equivalent to that available second information is not affected by power saving (power saving) or second information falling within a full sensing (full sensing) window may be used.

(2) The first terminal uses second information within a partial sensing (partial sensing) window. The partial sensing window includes, for example, at least one of the following: a periodic-based partial sensing (Periodic-Based Partial Sensing, PBPS) window and a continuous partial sensing (Continuous Partial Sensing, CPS) window. This example is equivalent to that the second information also needs to be affected by the partial sensing window of NR.

(3) A CPS window determined by the first terminal includes a timeslot in which LTE SCI is located. That is, when determining the CPS window, the first terminal includes, as much as possible, a timeslot in which the LTE SCI information is located. Because a size of the CPS window is not fixed, a factor of the LTE SCI is considered when the CPS window is determined, so as to select a resource that is less susceptible to interference.

(4) The first terminal performs resource selection by using LTE SCI within a period of time between a timeslot y0 and a timeslot (y0-L), where y0 is the 1st timeslot of a candidate resource set, and L is a positive integer, and may be predefined by a protocol, preconfigured/configured by a network, or determined by a terminal, for example, 32 or 10. This example is equivalent to defining a CPS window for the LTE SCI, so that even if the LTE SCI is not within a CPS window for the NR, the LTE SCI may participate in resource selection.

Optionally, in an embodiment, the first information includes the second information, and a time at which the first terminal receives the second information is no later than Y timeslots before a first moment. The first moment is at least one of the following: a moment at which resource selection is triggered, a resource reporting moment, a moment at which resource re-evaluation or preemption is triggered, and a time-domain location of the 1st resource in a candidate resource set. Y is first processing time duration. Y may be obtained based on related processing time $T_{proc,0}^{SL}$ and/or $T_{proc,1}^{SL}$ of resource selection in the NR protocol.

Part 2

A dual-mode terminal (for example, the first terminal) sends the coordination information, to help a terminal (for example, the second terminal) that has only an NR module work in a coexisting frequency band, so as to avoid a conflict with a resource selected by an LTE terminal. In Part 2, a terminal coordination mechanism based on LTE resource sensing is mainly described by using the coordination information request and the coordination information.

Optionally, in an embodiment, the first information includes the coordination information request, and that the first terminal performs resource selection based on first information includes: The first terminal sends the coordination information based on the coordination information request.

In a case that the first terminal sends the coordination information based on the coordination information request, the method further includes: The first terminal receives the coordination information request in a case that at least one of the following conditions is met:

(1) The first terminal supports the LTE access technology.
(2) The first terminal has enabled inter-UE coordination information (Inter-UE Coordination, IUC).
(3) A reference signal received power (Reference Signal Receiving Power, RSRP) measurement value in the coordination information request is greater than a threshold.
(4) The first terminal is a destination terminal corresponding to a terminal that sends the coordination information request.
(5) The first terminal is a terminal within a distance range required by the coordination information request.

In this embodiment, a non-destination terminal may be allowed to receive the coordination information request, and send the coordination information. Because if only the destination terminal sends the coordination information, only a conflict with a reserved resource of the LTE access technology around the destination terminal can be avoided, and an LTE access technology terminal around the terminal cannot be totally avoided. In this case, the non-destination terminal is allowed to also receive the coordination information request and send the coordination information, to better help the second terminal (the terminal that sends the coordination information request) avoid the reserved resource of the LTE access technology.

In a case that the first terminal sends the coordination information based on the coordination information request, the method further includes: The first terminal receives the coordination information request, and performs at least one of the following:

(1) triggering decoding of LTE SCI by using the LTE access technology to determine the second information;
(2) triggering transmission of the second information, where transmission may be performed inside the first terminal in this step;
(3) determining the coordination information, where the coordination information may include a reserved resource set of LTE, a recommended resource set, a non-recommended resource set, a resource conflict indication, or the like; and
(4) sending the coordination information.

Optionally, in an embodiment, the method further includes: The first terminal sends the coordination information in a case that at least one of the following is met:

(1) The first terminal has enabled IUC.
(2) The first terminal supports the LTE access technology.
(3) The first terminal has a capability of decoding LTE SCI, that is, the first terminal is a dual-mode terminal.
(4) The first terminal receives the coordination information request sent by the second terminal. Optionally, an RSRP measurement value in the coordination information request is greater than a threshold. The coordination information request may come from the second terminal. The second terminal supports the NR access technology, but does not support the LTE access technology. The second terminal may also be referred to as an NR only terminal. Alternatively, the second terminal supports both the NR access technology and the LTE access technology.
(5) The first terminal senses a reserved resource of LTE.
(6) The first terminal senses that an RSRP measurement value in target coordination information is less than a threshold. This is equivalent to that no other dual-mode terminal around the first terminal sends the coordination information, and this is equivalent to that one dual-mode terminal acts as the first terminal within a range. This restricts a large quantity of dual-mode terminals to sending the coordination information within a range, to cause system congestion.

(7) The first terminal senses the reserved resource of LTE, and at least one of the following is met: An RSRP measurement value is greater than a threshold; a difference between an RSRP measurement value according to an LTE SCI format 1 and an RSRP measurement value according to an SCI format 1-A of the second terminal is less than a threshold; the difference between the RSRP measurement value according to the LTE SCI format 1 and the RSRP measurement value according to the SCI format 1-A of the second terminal is greater than the threshold; the first terminal is a destination terminal of the second terminal; and the reserved resource of LTE overlaps (overlap) a reserved resource of the second terminal. The second terminal supports the NR access technology, but does not support the LTE access technology, or the second terminal supports both the NR access technology and the LTE access technology.

For example, when it is sensed that the RSRP measurement value of the reserved resource of LTE is greater than the threshold, LTE communication with relatively large interference may be avoided. For another example, when it is sensed that the difference between the RSRP measurement value according to the LTE SCI format 1 and the RSRP measurement value according to the SCI format 1-A of the second terminal is less than the threshold, it may be considered that the LTE RAT is relatively close to the second terminal, and therefore also needs to be avoided. For another example, when the difference between the RSRP measurement value according to the LTE SCI format 1 and the RSRP measurement value according to the SCI format 1-A of the second terminal is greater than the threshold, it may be considered that interference of LTE is relatively large, or the second terminal causes relatively large interference to LTE, and therefore LTE reserved resources need to be avoided.

It should be noted that the threshold in this embodiment may be predefined by a protocol, or configured/pre-configured by a network, or configured/pre-configured by a terminal.

Optionally, in an embodiment, the method further includes: The first terminal determines coordination information that meets at least one of the following:

(1) The first terminal uses a reserved resource of LTE in the second information as a resource indicated in the coordination information. That is, the first terminal directly notifies the second terminal of a resource of LTE, and how to exclude or select a resource depends on the second terminal.

(2) The first terminal uses the reserved resource of LTE in the second information as the resource indicated in the coordination information, where the coordination information indicates a non-recommended resource. That is, the first terminal notifies the second terminal of a resource that is not recommended for communication.

(3) The first terminal uses, as the resource indicated in the coordination information, a sensed reserved resource of LTE that falls within a selection window.

(4) The first terminal uses, as the resource indicated in the coordination information, a resource that overlaps (including partial overlapping or total overlapping) a reserved resource of LTE and that is within the selection window, where the coordination information indicates a non-recommended resource. When the first terminal is a destination terminal of the second terminal, and determines the non-recommended resource, the first terminal may also consider a half-duplex problem of the first terminal and a resource conflicting with another terminal. The following several items are similar. Optionally, an RSRP value of a resource within the selection window is greater than a threshold. Alternatively, an RSRP value of a resource within the selection window is less than a threshold (to protect reception of an RX UE). The foregoing threshold may be agreed in a protocol, pre-configured/configured by a network, or determined by a terminal.

(5) The first terminal excludes the resource that overlaps the reserved resource of LTE and that is within the selection window, and uses a remaining resource as the resource indicated in the coordination information, where the coordination information indicates a recommended resource. That is, the first terminal recommends a specific resource to the second terminal to select for communication.

(6) The first terminal uses, as the resource indicated in the coordination information, a resource that is in a candidate resource set determined by using the NR access technology and that does not overlap or partially overlaps the reserved resource of LTE, where the coordination information indicates a recommended resource. Optionally, the first terminal sends a recommended resource indicated in LTE SCI, to help the second terminal better avoid a conflict with the resource of LTE. In this case, it is equivalent to that the first terminal helps the second terminal perform LTE resource reservation, so that another LTE radio access technology (Radio Access Technologies, RAT) can recognize these reserved resources, thereby avoiding selecting these resources.

(7) The first terminal uses, as the resource indicated in the coordination information, a resource that is in the candidate resource set determined (that is within an NR selection window determined) by using the NR access technology and that overlaps an alternative candidate resource set determined by using the LTE access technology, where the coordination information indicates a recommended resource.

Optionally, in this embodiment, determining of a resource selection window of LTE meets at least one of the following: a. being implemented by a terminal; b. being indicated by the request signaling, or being, by default, a Kth subframe/timeslot after a subframe/timeslot in which request signaling is located; and c. start/end moments of selection windows determined by NR and the LTE RAT being in a same subframe/timeslot.

Optionally, in this embodiment, an RSRP threshold (threshold) used when LTE determines an alternative resource uses one piece of the following content: a threshold that is the same as an RSRP threshold of NR; the RSRP threshold of NR; and a threshold that is the same as both the LTE RSRP threshold and the NR RSRP threshold.

(8) The first terminal performs resource selection within the selection window, and uses a determined candidate resource set as the resource indicated in the coordination information, where the coordination information indicates a recommended resource.

Optionally, in an embodiment, the method further includes: The first terminal uses, as the coordination information (for detailed descriptions of the coordination information, refer to the descriptions on the second-terminal side), resource conflict information that meets at least one of the following:

(1) A reserved resource of the second terminal overlaps a reserved resource of LTE, including total overlapping or partial overlapping. The second terminal supports the NR access technology, but does not support the LTE access technology, or the second terminal supports both the NR access technology and the LTE access technology.
(2) A difference between an RSRP measurement value according to an LTE SCI format 1 corresponding to the reserved resource of LTE and an RSRP measurement value according to an SCI format 1-A corresponding to the reserved resource of the second terminal is greater than or less than a threshold. The second terminal supports the NR access technology but does not support the LTE access technology, or the second terminal supports both the NR access technology and the LTE access technology.
(3) The RSRP measurement value according to the LTE SCI format 1 corresponding to the reserved resource of LTE is greater than or less than a first threshold.
(4) The RSRP measurement value according to the SCI format 1-A corresponding to the reserved resource of the second terminal is greater than or less than a second threshold. For example, the LTE RSRP is greater than a threshold, and the RSRP according to SCI format 1-A of the second terminal is also greater than another threshold. The second terminal supports the NR access technology, but does not support the LTE access technology, or the second terminal supports both the NR access technology and the LTE access technology.
(5) A priority according to the LTE SCI format 1 is greater than or less than a third threshold.
(6) The SCI format 1-A of the second terminal is greater than or less than the third threshold. The second terminal supports the NR access technology but does not support the LTE access technology, or the second terminal supports both the NR access technology and the LTE access technology.
(7) The first terminal is a destination terminal of the second terminal, and the second terminal supports the NR access technology, but does not support the LTE access technology, or the second terminal supports both the NR access technology and the LTE access technology.

Optionally, in an embodiment, the coordination information request meets at least one of the following:

(1) The coordination information request carries first identifier information, and the first identifier information is used to indicate one of the following: a transmit end of the coordination information request requests reserved resource information of LTE, a recommended resource, a non-recommended resource, or a resource conflict indication.
(2) A propagation type of the coordination information request is broadcast, multicast, or unicast. That is, when the propagation type is broadcast or multicast, the second terminal is allowed to request the coordination information from a non-destination terminal, to better avoid a conflict with the reserved resource of LTE.

Optionally, in an embodiment, a priority of the coordination information request is determined based on at least one of the following:

(1) being determined based on a related priority of a sensed resource conflict;
(2) being determined based on a system congestion degree;
(3) being determined based on an LTE-related channel busy ratio (Channel Busy Ratio, CBR);
(4) being always a highest priority;
(5) being always a lowest priority;
(6) when the first terminal is not a destination terminal of a second terminal, the priority of the coordination information request being the lowest, where in this case, it is considered that not only one terminal may send the coordination information request, and therefore the priority may be set to be low;

(7) when the first terminal is not the destination terminal of the second terminal, the priority of the coordination information request being the highest, where for example, when the system congestion degree is relatively low/high, transmission reliability of the LTE terminal is preferentially considered;

(8) when the first terminal is the destination terminal of the second terminal, the priority of the coordination information request being the highest, where as the destination terminal, transmission reliability is directly ensured; and

(9) being determined based on a priority corresponding to data or a priority indicated in the coordination information request.

In the foregoing examples, the second terminal supports the NR access technology, but does not support the LTE access technology, or the second terminal supports both the NR access technology and the LTE access technology.

Optionally, in an embodiment, the coordination information meets at least one of the following:

(1) The coordination information carries second identifier information, and the second identifier information is used to indicate one of the following: the coordination information carries reserved resource information of LTE, a recommended resource, a non-recommended resource, or a resource conflict indication.

(2) A propagation type of the coordination information is broadcast, multicast, or unicast.

(3) The coordination information carries the resource conflict indication, and the resource conflict indication is used to indicate that the reserved resource of the second terminal overlaps a reserved resource of an LTE terminal.

Optionally, in an embodiment, a priority of the coordination information is determined based on at least one of the following:

(1) being determined based on a related priority of a sensed resource conflict;

(2) being determined based on a system congestion degree;

(3) being determined based on an LTE-related CBR;

(4) being always a highest priority;

(5) being always a lowest priority;

(6) when the first terminal is not the destination terminal of the second terminal, the priority of the coordination information being the lowest, where in this case, it is considered that not only one terminal may send the coordination information, and therefore the priority may be set to be low;

(7) when the first terminal is not the destination terminal of the second terminal, the priority of the coordination information being the highest, where for example, when the system congestion degree is relatively low/high, transmission reliability of the LTE terminal is preferentially considered;

(8) when the first terminal is the destination terminal of the second terminal, the priority of the coordination information being the highest, where as the destination terminal, transmission reliability is directly ensured; and

(9) being determined based on a priority corresponding to data or a priority indicated in the coordination information request.

In the foregoing examples, the second terminal supports the NR access technology, but does not support the LTE access technology, or the second terminal supports both the NR access technology and the LTE access technology.

In the foregoing examples, the coordination information request and the coordination information may be carried in at least one of the following: SCI, medium access control control element (Medium Access Control Control Element, MAC CE) signaling, and direct communication interface (PC5) radio resource control (RRC) signaling.

Part 3

Optionally, in an embodiment, the first information includes the resource pool configuration information, and the resource pool configuration information meets at least one of the following:

(1) A proportion of an overlapping resource between an NR resource pool and an LTE resource pool to resources in the LTE resource pool does not exceed a first proportion. For example, within every 1s/100ms, the proportion of the overlapping resource between the NR resource pool and the LTE resource pool to the resources in the LTE resource pool does not exceed 80%.

(2) A proportion of the overlapping resource between the NR resource pool and the LTE resource pool to resources in the NR resource pool does not exceed a second proportion. For example, within every 1s/100ms, the proportion of the overlapping resource between the NR resource pool and the LTE resource pool to the resources in the NR resource pool does not exceed 80%.

(3) A resource m and a resource n in a resource pool are in a first relationship, and the first relationship is related to performing resource selection based on received signal strength indicator (Received Signal Strength Indicator, RSSI) sorting. In this example, when performing resource selection based on RSSI sorting, the LTE module may sense that an RSSI of a resource occupied by NR is relatively high, and therefore is not less likely to select the resource in the NR resource pool.

(4) A resource pool corresponding to the resource pool configuration information includes a first resource, a second resource, and a third resource, and at least one of the following is met: The first resource supports being selected when a priority of data of the first terminal is greater than a first threshold, where the first terminal sends data by using the NR access technology; when it is sensed that an RSRP according to an LTE SCI format 1 is greater than a second threshold and/or the priority is less than a third threshold, the first terminal is not capable of selecting the second resource; and the third resource always supports being selected, for example, a resource that does not overlaps the LTE resource pool.

Optionally, a resource in the first resource and/or the second resource meets the first relationship, and the first relationship is related to performing resource selection based on RSSI sorting.

Optionally, the first relationship is: M = n-P*j, where m and n are resource identifiers, P is any one of a step parameter in a time division duplex (Time Division Duplexing, TDD) configuration and an LTE-configured reservation period, and j is an integer not less than 0. This is because when determining an RSSI of a resource within a selection window, the LTE RAT determines the RSSI of the resource within the selection window based on an RSSI of a resource existing before one or more steps or an RSSI of a resource existing before the reservation period. Therefore, when the resource in the NR resource pool meets the first relationship, the LTE module may be less likely to select the reserved resource of the NR RAT through RSSI sorting.

Optionally, in an embodiment, the first information includes the resource pool configuration information, a resource pool corresponding to the resource pool configuration information includes a first resource, a second resource, and a third resource, and when the first terminal performs resource selection, at least one of the following is met:

(1) If a priority of data of the first terminal is less than or equal to a first threshold, the first resource is not selected. Optionally, when the first terminal performs resource preemption check, if a priority of a current transport block (Transport Block, TB) is less than or equal to the first threshold, resource reselection is performed.

(2) If the priority of the data of the first terminal is less than a third threshold and/or when it is sensed that an RSRP according to an LTE SCI format 1 is greater than a second threshold, the second resource is not selected. Optionally, when the first terminal performs resource re-evaluation or preemption check, if it is sensed that the RSRP according to the LTE SCI format 1 is greater than the second threshold, resource re-selection is performed. When the first terminal performs resource re-evaluation or preemption check, if the priority of the current transport block (TB) is less than or equal to the second threshold, resource reselection is performed.

(3) When a CBR is less than a fourth threshold, the second resource and/or the third resource are/is preferentially selected.

(4) When the CBR is greater than a fifth threshold, selection of the first resource is supported, that is, the first terminal may select the first resource.

It should be noted that the foregoing Part 1, Part 2, and Part 3 may further be combined to form more embodiments. To avoid repetition, related descriptions are appropriately omitted.

To describe in detail the resource selection method provided in the embodiments of this application, the following describes the resource selection method with reference to several specific embodiments.

Embodiment 1

In this embodiment, a processing time change caused because the LTE module transfers the second information is mainly considered. The LTE module transmits the resource reservation information of LTE obtained through decoding, unlike the NR module that needs to decode SCI to obtain the resource reservation information. Therefore, for a sensing window used by the terminal, after processing time is considered, an LTE sensing window is different from an NR sensing window.

As shown in FIG. 3, it is assumed that T is time in which the LTE module transmits information to the NR module plus processing time of some information of the NR module. Therefore, the LTE sensing window of the dual-mode terminal should be updated to [n-$T_0$, n-T].

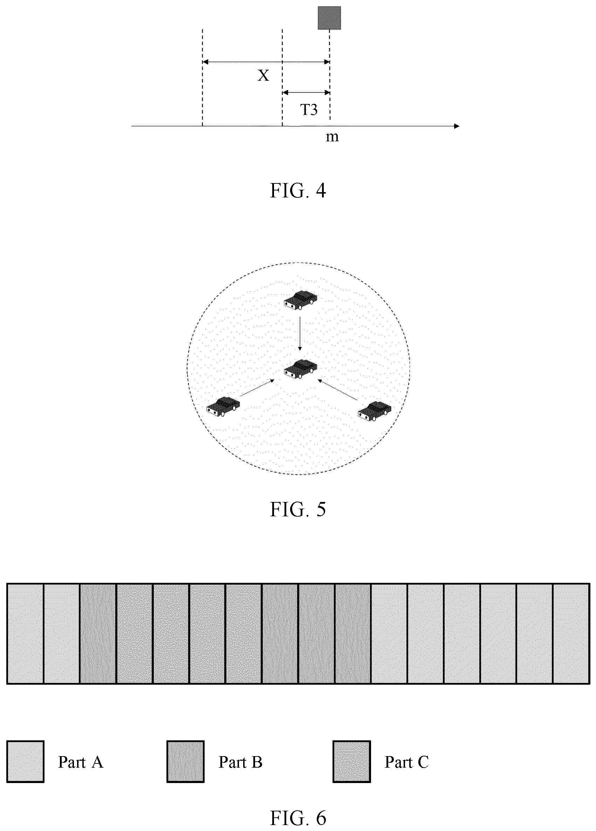

Similarly, for a re-evaluation or preemption check process, because the terminal needs to obtain resource reservation information of another LTE terminal by using the LTE module, the terminal may need to additionally complete a process such as triggering the LTE module to determine the resource reservation information of the another terminal, and then waiting for the resource reservation information. Alternatively, the terminal only needs to complete a check and reselection process by using the information already transferred by the LTE module. Therefore, this processing time is different from processing time in which the terminal only needs to complete a check and resource reselection process based on the sensing information of the NR module of the terminal. Therefore, when the processing time is determined, as shown in FIG. 4, a latest action for triggering re-evaluation or preemption check by the terminal may be defined based on longer processing time between X and T3, so that the terminal can consider resource reservation of NR, and can further consider resource reservation of the LTE terminal, so as to determine whether to perform resource reselection. X includes at least one piece of the following content: time duration for triggering transmission of the second information, time duration for processing the second information, and time duration for transmitting the second information. A meaning of T3 is as follows: The NR terminal expects to perform re-evaluation or preemption check no later than the T3 time of the resource.

Embodiment 2

In this embodiment, a terminal coordination information mechanism is mainly described. If a terminal that has only an NR module is allowed to exist in an LTE/NR coexisting resource pool, to prevent the terminal from affecting transmission of an LTE terminal, the dual-mode terminal needs to help, by using the terminal coordination information mechanism, the terminal avoid a resource selected by the LTE terminal.

A main purpose of the terminal coordination information mechanism is originally that a receive end helps a transmit end select a resource that does not conflict with a resource sent by another terminal to the same receive end or a transmission resource of the receive end. A purpose of helping the second terminal (a new radio only (NR only) terminal) by using this mechanism is not to affect another LTE terminal in the system. Therefore, it is clearly necessary to redefine a transmit/receive end and a propagation type in the terminal coordination mechanism.

For example, to know as much as possible reservation information of the LTE terminal in the system, a coordination information request needs to be broadcast or multicast, so that all other dual-mode terminals that have an LTE module can receive the coordination information request, and determine whether to send coordination information to the NR only terminal. In this case, the coordination information request may be sent through unicast targeted for a single destination terminal. For another example, it is assumed that for overall system performance and transmission performance of the LTE terminal, the dual-mode terminal is required to group-send coordination information to surrounding terminals every period of time or each time the reservation information of the LTE terminal is sensed. The NR only terminal that receives this information may avoid, by using the coordination information, a conflict with the resource selected by the LTE terminal. As shown in FIG. 5, a vehicle-mounted terminal in FIG. 5 may send the coordination information.

In a case that both the request signaling and the coordination information may be group-sent, because one dual-mode terminal may receive more than one coordination information request or one NR only terminal may receive more than one piece of coordination information, an action of the terminal needs to be defined in this case.

For example, the action is responding to all the received coordination information requests, determining a resource by using all the received coordination information, or considering the coordination information request or the coordination information only when some conditions are met. A simple method is to consider the coordination information request or the coordination information only when a distance or an RSRP measurement value meets a requirement. This is because when the terminal is relatively far, interference may not be enough to interfere with a transceiver of another terminal due to power attenuation. Therefore, the NR only terminal only needs not to affect an LTE terminal that is close to the NR only terminal. This is also equivalent to that coordination information provided by a very far dual-mode terminal may not play a significant role.

In addition, the dual-mode terminal needs to consider how to determine the coordination information. For example, all sensed reserved resources of LTE are used as the coordination information, or only a reserved resource of LTE that meets a condition such as an RSRP is used as the coordination information. In addition, the NR only terminal needs to consider how to perform resource selection by using the coordination information. For example, all or a part of reserved resources of LTE that meet a condition and that are indicated in the coordination information are directly excluded when a candidate resource set is initialized, or the reserved resource of LTE is excluded in another step.

In addition to indicating the reserved resource of LTE to another terminal to enable the another terminal to avoid the resource, the dual-mode terminal may directly send, to the another terminal, a recommended resource selected by the dual-mode terminal, so that the another terminal directly performs transmission by using the recommended resource without further resource exclusion/resource selection based on the coordination information. This method is particularly applicable to a scenario in which the dual-mode terminal is a destination terminal of data. In this case, the dual-mode terminal may further indicate the recommended resource by using LTE SCI, to protect transmission of the another terminal, especially the NR only terminal.

Embodiment 3

In this embodiment, a resource partitioning mechanism is mainly described. To share resources with an LTE terminal and minimize impact on the LTE terminal, a resource pool configuration of NR may divide the resources into three parts, namely, a part A, a part B, and a part C, as shown in FIG. 6.

For example, if a terminal expects to select a resource in the part A, a priority needs to be greater than a threshold. For a resource in the part B, the priority of data also needs to be greater than a specific threshold, and a resource in the part C can be selected randomly. In this case, although LTE cannot exclude a resource of the NR terminal, through RSSI sorting, it is unlikely to select resources selected by many NR terminals, thereby avoiding a conflict. In addition, based on a service proportion in a frequency band, a higher layer can update configuration information in a timely manner to implement more efficient resource sharing.

In addition, in an RSSI sorting process for resource selection, the LTE terminal performs RSSI sorting on candidate resources based on a parameter corresponding to a TDD configuration and a reservation period and by using RSSIs in historical timeslots. Therefore, resources in an NR resource pool may be configured to have a specific correspondence. In this way, during RSSI sorting, the LTE terminal ranks corresponding resources, that also belong to the NR resource pool, lower in a selection order because RSSI values of some resources in the NR resource pool are relatively high. This can also avoid a conflict with a resource selected by NR.

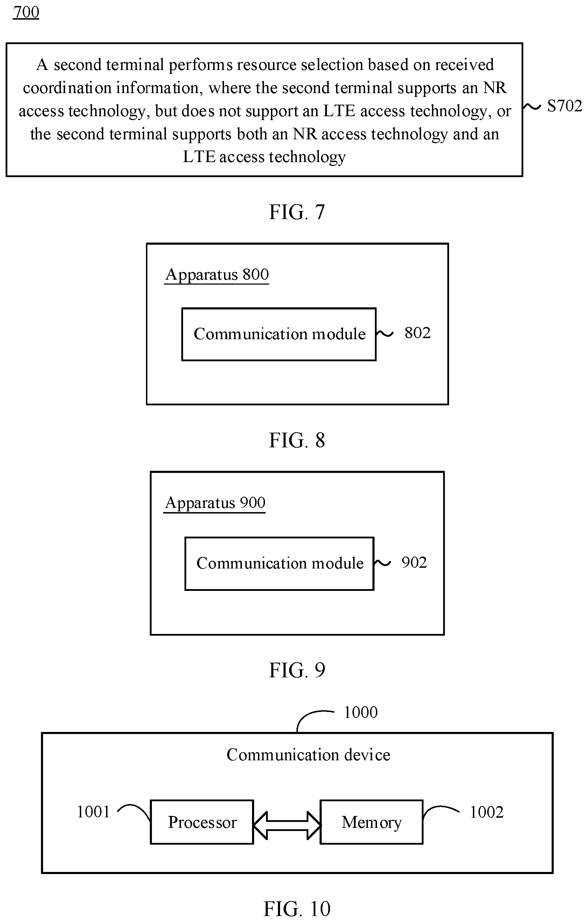

With reference to FIG. 2, the foregoing describes in detail the resource selection method in the embodiments of this application. The following describes in detail a resource selection method according to another embodiment of this application with reference to FIG. 7. It may be understood that interaction that is between the second terminal and the first terminal and that is described from the perspective of the second terminal is the same as or corresponds to the descriptions on the first-terminal side in the method shown in FIG. 2. To avoid repetition, related descriptions are appropriately omitted.

FIG. 7 is a schematic flowchart of implementing a resource selection method according to an embodiment of this application. The method may be applied to a second terminal. As shown in FIG. 7, the method 700 includes the following step:

S702: The second terminal performs resource selection based on received coordination information, where the second terminal supports an NR access technology, but does not support an LTE access technology, or the second terminal supports both an NR access technology and an LTE access technology.

In this embodiment of this application, the second terminal that supports only the NR access technology performs resource selection based on the received coordination information, so that a problem that a terminal cannot select a proper resource in a case that an NR sidelink UE coexists with an LTE sidelink UE on a frequency band is resolved. This helps the terminal select a proper resource for sidelink transmission, and improves resource utilization.

Optionally, in an embodiment, that the second terminal performs resource selection based on received coordination information includes: The second terminal excludes a reserved resource of LTE or a non-recommended resource indicated in the coordination information.

Optionally, in an embodiment, that the second terminal excludes a reserved resource of LTE or a non-recommended resource indicated in the coordination information includes at least one of the following: (1) When initializing a candidate resource set, the second terminal excludes the reserved resource of LTE or the non-recommended resource indicated in the coordination information; (2) after performing resource exclusion based on sensing information, the second terminal excludes the reserved resource of LTE or the non-recommended resource indicated in the coordination information; and (3) before reporting the candidate resource set to a MAC layer, the second terminal excludes the reserved resource of LTE or the non-recommended resource indicated in the coordination information.

Optionally, in an embodiment, that the second terminal performs resource selection based on received coordination information includes at least one of the following: (1) A MAC layer of the second terminal selects a resource from an intersection set of a recommended resource in the coordination information and a candidate resource set reported by a physical layer; and if there is no intersection set between the recommended resource in the coordination information and the candidate resource set reported by the physical layer, or a quantity of intersection sets does not meet a first requirement, the second terminal selects a resource from the candidate resource set reported by the physical layer; and (2) the second terminal triggers resource reselection after receiving conflict indication information, where the conflict indication information is included in the coordination information.

Optionally, in an embodiment, the method further includes: If the second terminal receives coordination information sent by a plurality of terminals, the second terminal performs at least one of the following: (1) excluding reserved resources of LTE or non-recommended resources indicated in a plurality of pieces of coordination information; (2) excluding a reserved resource of LTE or a non-recommended resource indicated in coordination information sent by a transmit end within a first distance from the second terminal; (3) excluding a reserved resource of LTE or a non-recommended resource indicated in coordination information sent by a transmit end whose transmit beam is quasi-co-located with a transmit beam of a destination terminal; and (4) excluding a reserved resource of LTE or a non-recommended resource indicated in the coordination information whose RSRP is greater than a threshold.

Optionally, in an embodiment, the method further includes: The second terminal receives the coordination information when at least one piece of the following content is met: (1) enabling IUC; (2) sending a coordination information request; (3) having no capability of obtaining reserved resource information of LTE through decoding; and (4) having data to be sent.

The resource selection method provided in the embodiments of this application may be performed by a resource selection apparatus. In the embodiments of this application, the resource selection apparatus provided in the embodiments of this application is described by using an example in which the resource selection apparatus performs the resource selection method.

FIG. 8 is a schematic diagram of a structure of a resource selection apparatus according to an embodiment of this application. The apparatus may be applied to a first terminal. As shown in FIG. 8, the apparatus 800 includes the following module:

a communication module 802, configured to perform resource selection based on first information, where the first terminal supports an LTE access technology and/or an NR access technology, and the first information includes at least one of the following: second information, where the second information includes LTE SCI sensing information of the LTE access technology or resource reservation information obtained after LTE SCI sensing information is processed; a coordination information request received by the first terminal; and resource pool configuration information.

Optionally, the apparatus 800 may further include a processing module.

Optionally, in an embodiment, the first information includes the second information, and in a case that the communication module performs full sensing or partial sensing by using the LTE access technology, the first terminal supports use of second information before an (n-T) moment, where n is at least one of the following: a moment at which a MAC layer triggers resource allocation using the NR access technology, a moment at which a data packet arrives, a moment at which transmission of the second information is triggered, a moment at which the second information is expected to be received, a moment at which processing of sensed second information by using the LTE access technology is notified, a moment at which resource re-evaluation or preemption is triggered, and a moment at which the 1st resource in a candidate resource set is located; and T is time duration for transmitting/processing the second information.

Optionally, in an embodiment, the first information includes the second information, and the communication module 802 is further configured to trigger resource re-evaluation or preemption before X timeslots of a resource r, where the resource r is a resource that is determined by the MAC layer for resource re-evaluation or preemption check. X includes at least one piece of the following content: time duration for triggering transmission of the second information; time duration for processing the second information; and time duration for transmitting the second information.

Optionally, in an embodiment, the first information includes the second information, and in a case that the communication module performs partial sensing by using the NR access technology, one of the following is met: (1) The first terminal uses all received second information; (2) the first terminal uses second information within a partial sensing window; (3) a CPS window determined by the first terminal includes a timeslot in which LTE sidelink control information SCI is located; and (4) the first terminal performs resource selection by using LTE SCI within a period of time between a timeslot y0 and a timeslot (y0-L), where y0 is the 1st timeslot of a candidate resource set, and L is a positive integer.

Optionally, in an embodiment, the first information includes the second information, and a time at which the first terminal receives the second information is no later than Y timeslots before a first moment. The first moment is at least one of the following: a moment at which resource selection is triggered, a resource reporting moment, a moment at which resource re-evaluation or preemption is triggered, and a time-domain location of the 1st resource in a candidate resource set. Y is first processing time duration.

Optionally, in an embodiment, the first information includes the coordination information request, and the communication module 802 is configured to send coordination information based on the coordination information request.

Optionally, in an embodiment, the communication module 802 is further configured to send coordination information in a case that at least one of the following is met: (1) The first terminal has enabled IUC; (2) the first terminal supports the LTE access technology; (3) the first terminal has a capability of decoding LTE SCI; (4) the first terminal receives the coordination information request sent by a second terminal; (5) the first terminal senses a reserved resource of LTE; (6) the first terminal senses that an RSRP measurement value in target coordination information is less than a threshold; and (7) the first terminal senses the reserved resource of LTE, and at least one of the following is met: An RSRP measurement value is greater than a threshold; a difference between an RSRP measurement value according to an LTE SCI format 1 and an RSRP measurement value according to an SCI format 1-A of the second terminal is less than a threshold; the first terminal is a destination terminal of the second terminal; and the reserved resource of LTE overlaps a reserved resource of the second terminal.

Optionally, in an embodiment, the first information includes the resource pool configuration information, and the resource pool configuration information meets at least one of the following: (1) A proportion of an overlapping resource between an NR resource pool and an LTE resource pool to resources in the LTE resource pool does not exceed a first proportion; (2) a proportion of the overlapping resource between the NR resource pool and the LTE resource pool to resources in the NR resource pool does not exceed a second proportion; (3) a resource m and a resource n in a resource pool are in a first relationship, and the first relationship is related to performing resource selection based on RSSI sorting; and (4) a resource pool corresponding to the resource pool configuration information includes a first resource, a second resource, and a third resource, and at least one of the following is met: The first resource supports being selected when a priority of data of the first terminal is greater than a first threshold, where the first terminal sends data by using the NR access technology; when it is sensed that an RSRP according to an LTE SCI format 1 is greater than a second threshold and/or the priority is less than a third threshold, the first terminal is not capable of selecting the second resource; and the third resource always supports being selected.

Optionally, in an embodiment, the first information includes the resource pool configuration information, a resource pool corresponding to the resource pool configuration information includes a first resource, a second resource, and a third resource, and when the communication module performs resource selection, at least one of the following is met: (1) If a priority of data of the first terminal is less than or equal to a first threshold, the first resource is not selected; (2) if the priority of the data of the first terminal is less than a third threshold and/or when it is sensed that an RSRP according to an LTE SCI format 1 is greater than a second threshold, the second resource is not selected; (3) when a CBR is less than a fourth threshold, the second resource and/or the third resource are/is preferentially selected; and (4) when the CBR is greater than a fifth threshold, selection of the first resource is supported.

In this embodiment of this application, a problem that a terminal cannot select a proper resource in a case that an NR sidelink UE coexists with an LTE sidelink UE on a frequency band. This helps the terminal select a proper resource for sidelink transmission, and improves resource utilization.

For the apparatus 800 in this embodiment of this application, refer to the procedure corresponding to the method 200 in this embodiment of this application. In addition, units/modules in the apparatus 800 and other operations and/or functions described above are separately intended to implement a corresponding procedure in the method 200, and a same or equivalent technical effect can be achieved. For brevity, details are not described herein again.

The resource selection apparatus in this embodiment of this application may be an electronic device, for example, an electronic device with an operating system, or may be a component in an electronic device, for example, an integrated circuit or a chip. The electronic device may be a terminal, or may be another device other than the terminal. For example, the terminal may include but is not limited to types of the terminal 11 listed above. The another device may be a server, a network attached storage (Network Attached Storage, NAS), or the like. This is not specifically limited in this embodiment of this application.

FIG. 9 is a schematic diagram of a structure of a resource selection apparatus according to an embodiment of this application. The apparatus may be applied to a second terminal. As shown in FIG. 9, the apparatus 900 includes the following module:

a communication module 902, configured to perform resource selection based on received coordination information, where the second terminal supports an NR access technology, but does not support an LTE access technology, or the second terminal supports both an NR access technology and an LTE access technology.

Optionally, the apparatus 900 may further include a processing module.

In this embodiment of this application, a problem that a terminal cannot select a proper resource in a case that an NR sidelink UE coexists with an LTE sidelink UE on a frequency band. This helps the terminal select a proper resource for sidelink transmission, and improves resource utilization.

Optionally, in an embodiment, the communication module is configured to exclude a reserved resource of LTE or a non-recommended resource indicated in the coordination information.

Optionally, in an embodiment, the communication module is configured to perform at least one of the following: (1) when initializing a candidate resource set, excluding the reserved resource of LTE or the non-recommended resource indicated in the coordination information; (2) after performing resource exclusion based on sensing information, excluding the reserved resource of LTE or the non-recommended resource indicated in the coordination information; and (3) before reporting the candidate resource set to a MAC layer, excluding the reserved resource of LTE or the non-recommended resource indicated in the coordination information.

Optionally, in an embodiment, the communication module is configured to perform at least one of the following: (1) selecting, by a MAC layer, a resource from an intersection set of a recommended resource in the coordination information and a candidate resource set reported by a physical layer; and if there is no intersection set between the recommended resource in the coordination information and the candidate resource set reported by the physical layer, or a quantity of intersection sets does not meet a first requirement, selecting a resource from the candidate resource set reported by the physical layer; and (2) triggering resource reselection after receiving conflict indication information, where the conflict indication information is included in the coordination information.

Optionally, in an embodiment, the communication module is further configured to: if receiving coordination information sent by a plurality of terminals, perform at least one of the following: (1) excluding reserved resources of LTE or non-recommended resources indicated in a plurality of pieces of coordination information; (2) excluding a reserved resource of LTE or a non-recommended resource indicated in coordination information sent by a transmit end within a first distance from the second terminal; (3) excluding a reserved resource of LTE or a non-recommended resource indicated in coordination information sent by a transmit end whose transmit beam is quasi-co-located with a transmit beam of a destination terminal; and (4) excluding a reserved resource of LTE or a non-recommended resource indicated in the coordination information whose RSRP is greater than a threshold.

For the apparatus 900 in this embodiment of this application, refer to the procedure corresponding to the method 700 in this embodiment of this application. In addition, units/modules in the apparatus 900 and other operations and/or functions described above are separately intended to implement a corresponding procedure in the method 700, and a same or equivalent technical effect can be achieved. For brevity, details are not described herein again.

The resource selection apparatus provided in this embodiment of this application can implement processes implemented in the method embodiment in FIG. 2 or FIG. 7, and a same technical effect is achieved. To avoid repetition, details are not described herein again.

Optionally, as shown in FIG. 10, an embodiment of this application further provides a communication device 1000, including a processor 1001 and a memory 1002. The memory 1002 stores a program or instructions capable of running on the processor 1001. For example, when the communication device 1000 is a terminal, the program or instructions is or are executed by the processor 1001 to implement the steps in the foregoing resource selection method embodiment, and a same technical effect can be achieved. To avoid repetition, details are not described herein again.

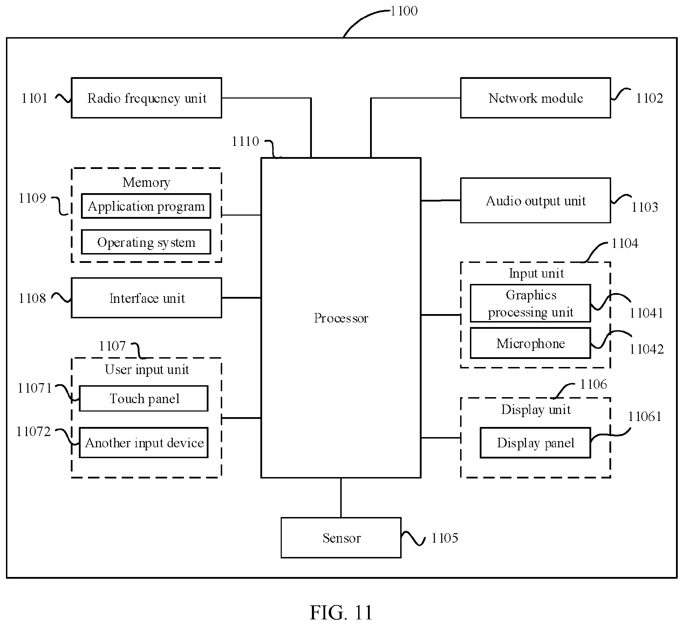

An embodiment of this application further provides a terminal, including a processor and a communication interface. The communication interface is configured to perform resource selection based on first information, where the first terminal supports an LTE access technology and/or an NR access technology, and the first information includes at least one of the following: second information, where the second information includes LTE SCI sensing information of the LTE access technology or resource reservation information obtained after LTE SCI sensing information is processed; a coordination information request received by the first terminal; and resource pool configuration information. Alternatively, the communication interface is configured to perform resource selection based on received coordination information, where the second terminal supports an NR access technology, but does not support an LTE access technology, or the second terminal supports both an NR access technology and an LTE access technology. This terminal embodiment corresponds to the foregoing terminal-side method embodiment. Implementation processes and implementations of the foregoing method embodiment may be applied to this terminal embodiment, and a same technical effect can be achieved. Specifically, FIG. 11 is a schematic diagram of a hardware structure of a terminal for implementing an embodiment of this application.

The terminal 1100 includes but is not limited to at least a part of components in a radio frequency unit 1101, a network module 1102, an audio output unit 1103, an input unit 1104, a sensor 1105, a display unit 1106, a user input unit 1107, an interface unit 1108, a memory 1109, a processor 1110, and the like.

A person skilled in the art may understand that the terminal 1100 may further include a power supply (for example, a battery) that supplies power to each component. The power supply may be logically connected to the processor 1110 by using a power management system, to manage functions such as charging, discharging, and power consumption by using the power management system. The structure of the terminal shown in FIG. 11 constitutes no limitation on the terminal, and the terminal may include more or fewer components than those shown in the figure, or combine some components, or have different component arrangements. Details are not described herein.

It should be understood that in this embodiment of this application, the input unit 1104 may include a graphics processing unit (Graphics Processing Unit, GPU) 11041 and a microphone 11042, and the GPU 11041 processes image data of a still picture or a video obtained by an image capture apparatus (such as a camera) in a video capture mode or an image capture mode. The display unit 1106 may include a display panel 11061, and the display panel 11061 may be configured in a form of a liquid crystal display, an organic light emitting diode, or the like. The user input unit 1107 includes at least one of a touch panel 11071 and another input device 11072. The touch panel 11071 is also referred to as a touchscreen. The touch panel 11071 may include a touch detection apparatus and a touch controller. The another input device 11072 may include but is not limited to a physical keyboard, a function key (such as a volume control key or an on/off key), a trackball, a mouse, and a joystick. Details are not described herein.

In this embodiment of this application, after receiving downlink data from a network-side device, the radio frequency unit 1101 may transmit the downlink data to the processor 1110 for processing. In addition, the radio frequency unit 1101 may send uplink data to the network-side device. Generally, the radio frequency unit 1101 includes but is not limited to an antenna, an amplifier, a transceiver, a coupler, a low-noise amplifier, a duplexer, and the like.

The memory 1109 may be configured to store a software program or instructions and various types of data. The memory 1109 may mainly include a first storage area for storing a program or instructions and a second storage area for storing data. The first storage area may store an operating system, an application program or instructions (such as a sound playing function or an image playing function) required by at least one function, and the like. In addition, the memory 1109 may include a volatile memory or a nonvolatile memory, or the memory 1109 may include both a volatile memory and a nonvolatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synch link DRAM, SLDRAM), and a direct rambus random access memory (Direct Rambus RAM, DRRAM). The memory 1109 in this embodiment of this application includes but is not limited to these memories and a memory of any other suitable type.

The processor 1110 may include one or more processing units. Optionally, the processor 1110 integrates an application processor and a modem processor. The application processor mainly processes operations related to an operating system, a user interface, an application program, and the like. The modem processor mainly processes a wireless communication signal, for example, a baseband processor. It may be understood that the modem processor may not be integrated into the processor 1110.

The radio frequency unit 1101 may be configured to perform resource selection based on first information, where the terminal supports an LTE access technology and/or an NR access technology, and the first information includes at least one of the following: second information, where the second information includes LTE SCI sensing information of the LTE access technology or resource reservation information obtained after LTE SCI sensing information is processed; a coordination information request received by the terminal; and resource pool configuration information. Alternatively, the radio frequency unit 1101 may be configured to perform resource selection based on received coordination information, where the terminal supports an NR access technology, but does not support an LTE access technology, or the terminal supports both an NR access technology and an LTE access technology.

In this embodiment of this application, a problem that a terminal cannot select a proper resource in a case that an NR sidelink UE coexists with an LTE sidelink UE on a frequency band. This helps the terminal select a proper resource for sidelink transmission, and improves resource utilization.

The terminal 1100 provided in this embodiment of this application may further implement various processes of the foregoing resource selection method embodiment, and a same technical effect can be achieved. To avoid repetition, details are not described herein again.

An embodiment of this application further provides a readable storage medium. A program or instructions is or are stored in the readable storage medium. When the program or the instructions is or are executed by a processor, various processes of the foregoing resource selection method embodiment are implemented, and a same technical effect can be achieved. To avoid repetition, details are not described herein again.

The processor is a processor in the terminal described in the foregoing embodiment. The readable storage medium includes a computer-readable storage medium such as a read-only memory ROM, a random access memory RAM, a magnetic disk, or an optical disc.

An embodiment of this application further provides a chip. The chip includes a processor and a communication interface. The communication interface is coupled to the processor. The processor is configured to run a program or instructions to implement various processes of the foregoing resource selection method embodiment, and a same technical effect can be achieved. To avoid repetition, details are not described herein again.

It should be understood that the chip mentioned in this embodiment of this application may also be referred to as a system-level chip, a system chip, a chip system, or a system on chip.

An embodiment of this application further provides a computer program/program product. The computer program/program product is stored in a storage medium, and the computer program/program product is executed by at least one processor to implement various processes of the foregoing resource selection method embodiment, and a same technical effect can be achieved. To avoid repetition, details are not described herein again.

An embodiment of this application further provides a resource selection system, including a first terminal and a second terminal. The first terminal may be configured to perform the steps of the resource selection method, and the second terminal may be configured to perform the steps of the resource selection method.

It should be noted that in this specification, the terms "include", "comprise", or any other variation thereof in this specification are intended to cover a non-exclusive inclusion, so that a process, method, article, or apparatus that includes a list of elements includes the elements, and also includes other elements that are not expressly listed, or further includes elements inherent to such a process, method, article, or apparatus. Without more limitations, elements defined by the sentence "including one" does not exclude that there are still other same elements in the processes, methods, articles, or apparatuses that include the elements. In addition, it should be noted that the scope of the method and apparatus in the implementations of this application is not limited to performing a function in a sequence shown or discussed, and may further include performing a function in a basically simultaneous manner or in a reverse sequence based on a related function. For example, the described method may be performed in an order from the described order, and various steps may be added, omitted, or combined. In addition, features described with reference to some examples may be combined in other examples.

Based on the descriptions in the foregoing implementations, a person skilled in the art may clearly learn that the method in the foregoing embodiment may be implemented by software in addition to a necessary universal hardware platform or by hardware only. In most circumstances, the former is a better implementation. Based on such an understanding, the technical solutions of this application essentially, or the part contributing to the prior art, may be presented in the form of a computer software product. The computer software product is stored in a storage medium (for example, a ROM/RAM, a magnetic disk, or an optical disc) including several instructions to enable a terminal (which may be a mobile phone, a computer, a server, an air-conditioner, a network device, or the like) to perform the methods described in the embodiments of this application.

The embodiments of this application are described with reference to the accompanying drawings. However, this application is not limited to the foregoing specific implementations. The foregoing specific implementations are merely examples, and are not intended to impose a limitation. Inspired by this application, a person of ordinary skill in the art may make many variations without departing from the spirit and the scope of the claims of this application, all of which fall within the protection scope of this application.

**Claims**

1.  A resource selection method, comprising:
    performing, by a first terminal, resource selection based on first information, wherein the first terminal supports a long term evolution LTE access technology and/or a new radio NR access technology, and the first information comprises at least one of the following:

    second information, wherein the second information comprises LTE sidelink control information SCI sensing information of the LTE access technology or resource reservation information obtained after LTE SCI sensing information is processed;
    a coordination information request received by the first terminal; and
    resource pool configuration information.

2.  The method according to claim 1, wherein the first information comprises the second information, and in a case that the first terminal performs full sensing or partial sensing by using the LTE access technology, the first terminal supports use of second information before an (n-T) moment, wherein

n is at least one of the following: a moment at which a medium access control MAC layer triggers resource allocation using the NR access technology, a moment at which a data packet arrives, a moment at which transmission of the second information is triggered, a moment at which the second information is expected to be received, a moment at which processing of sensed second information by using the LTE access technology is notified, a moment at which resource re-evaluation or preemption is triggered, and a moment at which the 1st resource in a candidate resource set is located; and
T is time duration for transmitting and/or processing the second information.

3.  The method according to claim 1, wherein the first information comprises the second information, and the method further comprises: triggering, by the first terminal, resource re-evaluation or preemption before X timeslots of a resource r, wherein the resource r is a resource that is determined by a MAC layer for resource re-evaluation or preemption check; and
    X comprises at least one piece of the following content:

    time duration for triggering transmission of the second information;
    time duration for processing the second information; and
    time duration for transmitting the second information.

4.  The method according to claim 1, wherein the first information comprises the second information, and in a case that the first terminal performs partial sensing by using the NR access technology, one of the following is met:

    the first terminal uses all received second information;
    the first terminal uses second information within a partial sensing window;
    a CPS window determined by the first terminal comprises a timeslot in which LTE sidelink control information SCI is located; and
    the first terminal performs resource selection by using LTE SCI within a period of time between a timeslot y0 and a timeslot (y0-L), wherein y0 is the 1st timeslot of a candidate resource set, and L is a positive integer.

5.  The method according to claim 1, wherein the first information comprises the second information, and a time at which the first terminal receives the second information is no later than Y timeslots before a first moment; and

the first moment is at least one of the following: a moment at which resource selection is triggered, a resource reporting moment, a moment at which resource re-evaluation or preemption is triggered, and a time-domain location of the 1st resource in a candidate resource set; and Y is first processing time duration.

6. The method according to claim 1, wherein the first information comprises the coordination information request, and the performing, by a first terminal, resource selection based on first information comprises:

sending, by the first terminal, coordination information based on the coordination information request.

7. The method according to claim 6, wherein the method further comprises: receiving, by the first terminal, the coordination information request in a case that at least one of the following conditions is met:

the first terminal supports the LTE access technology;
the first terminal has enabled inter-UE coordination information IUC;
a reference signal received power RSRP measurement value in the coordination information request is greater than a threshold;
the first terminal is a destination terminal corresponding to a terminal that sends the coordination information request; and
the first terminal is a terminal within a distance range required by the coordination information request.

8. The method according to claim 6, wherein the method further comprises: receiving, by the first terminal, the coordination information request, and performing at least one of the following:

triggering decoding of LTE SCI by using the LTE access technology to determine the second information;
triggering transmission of the second information;
determining the coordination information; and
sending the coordination information.

9. The method according to claim 1, wherein the method further comprises: sending, by the first terminal, coordination information in a case that at least one of the following is met:

the first terminal has enabled IUC;
the first terminal supports the LTE access technology;
the first terminal has a capability of decoding LTE SCI;

the first terminal receives the coordination information request sent by a second terminal;
the first terminal senses a reserved resource of LTE;
the first terminal senses that an RSRP measurement value in target coordination information is less than a threshold; and
the first terminal senses the reserved resource of LTE, and at least one of the following is met: an RSRP measurement value is greater than a threshold; a difference between an RSRP measurement value according to an LTE SCI format 1 and an RSRP measurement value according to an SCI format 1-A of the second terminal is less than a threshold; the first terminal is a destination terminal of the second terminal; and the reserved resource of LTE overlaps a reserved resource of the second terminal.

10. The method according to claim 1, wherein the method further comprises: determining, by the first terminal, coordination information that meets at least one of the following:

the first terminal uses a reserved resource of LTE in the second information as a resource indicated in the coordination information;
the first terminal uses the reserved resource of LTE in the second information as the resource indicated in the coordination information, wherein the coordination information indicates a non-recommended resource;
the first terminal uses, as the resource indicated in the coordination information, a sensed reserved resource of LTE that falls within a selection window;
the first terminal uses, as the resource indicated in the coordination information, a resource that overlaps a reserved resource of LTE and that is within the selection window, wherein the coordination information indicates a non-recommended resource;
the first terminal excludes the resource that overlaps the reserved resource of LTE and that is within the selection window, and uses a remaining resource as the resource indicated in the coordination information, wherein the coordination information indicates a recommended resource;
the first terminal uses, as the resource indicated in the coordination information, a resource that is in a candidate resource set determined by using the NR access technology and that does not overlap or partially overlaps the reserved resource of LTE, wherein the coordination information indicates a recommended resource;
the first terminal uses, as the resource indicated in the coordination information, a resource that is in the candidate resource set determined by using the NR access technology and that overlaps an alternative candidate resource set determined by using the LTE access technology, wherein the coordination information indicates a recommended resource; and

the first terminal performs resource selection within the selection window, and uses a determined candidate resource set as the resource indicated in the coordination information, wherein the coordination information indicates a recommended resource.

11. The method according to claim 1, wherein the method further comprises: using, by the first terminal as coordination information, resource conflict information that meets at least one of the following:

a reserved resource of a second terminal overlaps a reserved resource of LTE;

a difference between an RSRP measurement value according to an LTE SCI format 1 corresponding to the reserved resource of LTE and an RSRP measurement value according to an SCI format 1-A corresponding to the reserved resource of the second terminal is less than a threshold;

the RSRP measurement value according to the LTE SCI format 1 corresponding to the reserved resource of LTE is greater than or less than a first threshold;

the RSRP measurement value according to the SCI format 1-A corresponding to the reserved resource of the second terminal is greater than or less than a second threshold;

a priority according to the LTE SCI format 1 is greater than or less than a third threshold;

the SCI format 1-A of the second terminal is greater than or less than the third threshold; and

the first terminal is a destination terminal of the second terminal.

12. The method according to claim 1, wherein the coordination information request meets at least one of the following:

the coordination information request carries first identifier information, and the first identifier information is used to indicate one of the following: a transmit end of the coordination information request requests reserved resource information of LTE, a recommended resource, a non-recommended resource, or a resource conflict indication; and

a propagation type of the coordination information request is broadcast, multicast, or unicast.

13. The method according to claim 1, wherein a priority of the coordination information request is determined based on at least one of the following:

being determined based on a related priority of a sensed resource conflict;

being determined based on a system congestion degree;

being determined based on an LTE-related channel busy ratio CBR;

being always a highest priority;

being always a lowest priority;

when the first terminal is not a destination terminal of a second terminal, the priority of the coordination information request being the lowest;

when the first terminal is not the destination terminal of the second terminal, the priority of the coordination information request being the highest;

when the first terminal is the destination terminal of the second terminal, the priority of the coordination information request being the highest; and

being determined based on a priority corresponding to data or a priority indicated in the coordination information request.

14. The method according to any one of claims 9 to 11, wherein the coordination information meets at least one of the following:

the coordination information carries second identifier information, and the second identifier information is used to indicate one of the following: the coordination information carries reserved resource information of LTE, a recommended resource, a non-recommended resource, or a resource conflict indication;

a propagation type of the coordination information is broadcast, multicast, or unicast; and

the coordination information carries the resource conflict indication, and the resource conflict indication is used to indicate that the reserved resource of the second terminal overlaps a reserved resource of an LTE terminal.

15. The method according to any one of claims 9 to 11, wherein a priority of the coordination information is determined based on at least one of the following:

being determined based on a related priority of a sensed resource conflict;

being determined based on a system congestion degree;

being determined based on an LTE-related channel busy ratio CBR;

being always a highest priority;

being always a lowest priority;

when the first terminal is not the destination terminal of the second terminal, the priority of the coordination information being the lowest; when the first terminal is not the destination terminal of the second terminal, the priority of the coordination information being the highest; when the first terminal is the destination terminal of the second terminal, the priority of the coordination information being the highest; and being determined based on a priority corresponding to data or a priority indicated in the coordination information request.

16. The method according to claim 1, wherein the first information comprises the resource pool configuration information, and the resource pool configuration information meets at least one of the following:

a proportion of an overlapping resource between an NR resource pool and an LTE resource pool to resources in the LTE resource pool does not exceed a first proportion; a proportion of the overlapping resource between the NR resource pool and the LTE resource pool to resources in the NR resource pool does not exceed a second proportion; a resource m and a resource n in a resource pool are in a first relationship, and the first relationship is related to performing resource selection based on RSSI sorting; and a resource pool corresponding to the resource pool configuration information comprises a first resource, a second resource, and a third resource, and at least one of the following is met: the first resource supports being selected when a priority of data of the first terminal is greater than a first threshold, wherein the first terminal sends data by using the NR access technology; when it is sensed that an RSRP according to an LTE SCI format 1 is greater than a second threshold and/or the priority is less than a third threshold, the first terminal is not capable of selecting the second resource; and the third resource always supports being selected.

17. The method according to claim 16, wherein a resource in the first resource and/or the second resource meets the first relationship, and the first relationship is related to performing resource selection based on RSSI sorting.

18. The method according to claim 16 or 17, wherein the first relationship is m=n-P*j, wherein m and n are resource identifiers, P is any one of a parameter in a time division duplex TDD configuration and an LTE-configured reservation period, and j is an integer not less than 0.

19. The method according to claim 1, wherein the first information comprises the resource pool configuration information, a resource pool corresponding to the resource pool configuration information comprises a first resource, a second resource, and a third resource, and when the first terminal performs resource selection, at least one of the following is met:

if a priority of data of the first terminal is less than or equal to a first threshold, the first resource is not selected; if the priority of the data of the first terminal is less than a third threshold and/or when it is sensed that an RSRP according to an LTE SCI format 1 is greater than a second threshold, the second resource is not selected; when a CBR is less than a fourth threshold, the second resource and/or the third resource are/is preferentially selected; and when the CBR is greater than a fifth threshold, selection of the first resource is supported.

20. A resource selection method, comprising: performing, by a second terminal, resource selection based on received coordination information, wherein the second terminal supports an NR access technology, but does not support an LTE access technology, or the second terminal supports both an NR access technology and an LTE access technology.

21. The method according to claim 20, wherein the performing, by a second terminal, resource selection based on received coordination information comprises: excluding, by the second terminal, a reserved resource of LTE or a non-recommended resource indicated in the coordination information.

22. The method according to claim 21, wherein the excluding, by the second terminal, a reserved resource of LTE or a non-recommended resource indicated in the coordination information comprises at least one of the following:

when initializing a candidate resource set, excluding, by the second terminal, the reserved resource of LTE or the non-recommended resource indicated in the coordination information; after performing resource exclusion based on sensing information, excluding, by the second terminal, the reserved resource of LTE or the non-recommended resource indicated in the coordination information; and before reporting the candidate resource set to a MAC layer, excluding, by the second terminal, the reserved resource of LTE or the non-recommended resource indicated in the coordination information.

23. The method according to claim 20, wherein the performing, by a second terminal, resource selection based on received coordination information comprises at least one of the following:

selecting, by a MAC layer of the second terminal, a resource from an intersection set of a recommended resource in the coordination information and a candidate resource set reported by a physical layer; and if there is no intersection set between the recommended resource in the coordination information and the candidate resource set reported by the physical layer, or a quantity of intersection sets does not meet a first requirement, selecting, by the second terminal, a resource from the candidate resource set reported by the physical layer; and

triggering, by the second terminal, resource reselection after receiving conflict indication information, wherein the conflict indication information is comprised in the coordination information.

24. The method according to claim 20, wherein the method further comprises: if the second terminal receives coordination information sent by a plurality of terminals, performing at least one of the following:

excluding reserved resources of LTE or non-recommended resources indicated in a plurality of pieces of coordination information;

excluding a reserved resource of LTE or a non-recommended resource indicated in coordination information sent by a transmit end within a first distance from the second terminal;

excluding a reserved resource of LTE or a non-recommended resource indicated in coordination information sent by a transmit end whose transmit beam is quasi-co-located with a transmit beam of a destination terminal; and

excluding a reserved resource of LTE or a non-recommended resource indicated in the coordination information whose RSRP is greater than a threshold.

25. A resource selection apparatus, applied to a first terminal and comprising:
a communication module, configured to perform resource selection based on first information, wherein the first terminal supports an LTE access technology and/or an NR access technology, and the first information comprises at least one of the following:

second information, wherein the second information comprises LTE SCI sensing information of the LTE access technology or resource reservation information obtained after LTE SCI sensing information is processed;
a coordination information request received by the first terminal; and
resource pool configuration information.

26. The apparatus according to claim 25, wherein the first information comprises the second information, and in a case that the communication module performs full sensing or partial sensing by using the LTE access technology, the first terminal supports use of second information before an (n-T) moment, wherein

n is at least one of the following: a moment at which a MAC layer triggers resource allocation using the NR access technology, a moment at which a data packet arrives, a moment at which transmission of the second information is triggered, a moment at which the second information is expected to be received, a moment at which processing of sensed second information by using the LTE access technology is notified, a moment at which resource re-evaluation or preemption is triggered, and a moment at which the 1st resource in a candidate resource set is located; and
T is time duration for transmitting and/or processing the second information.

27. The apparatus according to claim 25, wherein the first information comprises the second information, and the communication module is further configured to trigger resource re-evaluation or preemption before X timeslots of a resource r, wherein the resource r is a resource that is determined by a MAC layer for resource re-evaluation or preemption check; and
X comprises at least one piece of the following content:

time duration for triggering transmission of the second information;
time duration for processing the second information; and
time duration for transmitting the second information.

28. The apparatus according to claim 25, wherein the first information comprises the second information, and in a case that the communication module performs partial sensing by using the NR access technology, one of the following is met:

the first terminal uses all received second information;
the first terminal uses second information within a partial sensing window;
a CPS window determined by the first terminal comprises a timeslot in which LTE sidelink control information SCI is located; and

the first terminal performs resource selection by using LTE SCI within a period of time between a timeslot y0 and a timeslot (y0-L), wherein y0 is the 1st timeslot of a candidate resource set, and L is a positive integer.

29. The apparatus according to claim 25, wherein the first information comprises the second information, and a time at which the first terminal receives the second information is no later than Y timeslots before a first moment; and
the first moment is at least one of the following: a moment at which resource selection is triggered, a resource reporting moment, a moment at which resource re-evaluation or preemption is triggered, and a time-domain location of the 1st resource in a candidate resource set; and Y is first processing time duration.

30. The apparatus according to claim 25, wherein the first information comprises the coordination information request, and the communication module is configured to send coordination information based on the coordination information request.

31. The apparatus according to claim 25, wherein the communication module is further configured to send coordination information in a case that at least one of the following is met:

the first terminal has enabled IUC;
the first terminal supports the LTE access technology;
the first terminal has a capability of decoding LTE SCI;
the first terminal receives the coordination information request sent by a second terminal;
the first terminal senses a reserved resource of LTE;
the first terminal senses that an RSRP measurement value in target coordination information is less than a threshold; and
the first terminal senses the reserved resource of LTE, and at least one of the following is met: an RSRP measurement value is greater than a threshold; a difference between an RSRP measurement value according to an LTE SCI format 1 and an RSRP measurement value according to an SCI format 1-A of the second terminal is less than a threshold; the first terminal is a destination terminal of the second terminal; and the reserved resource of LTE overlaps a reserved resource of the second terminal.

32. The apparatus according to claim 25, wherein the first information comprises the resource pool configuration information, and the resource pool configuration information meets at least one of the following:

a proportion of an overlapping resource between an NR resource pool and an LTE resource pool to resources in the LTE resource pool does not exceed a first proportion;
a proportion of the overlapping resource between the NR resource pool and the LTE resource pool to resources in the NR resource pool does not exceed a second proportion;
a resource m and a resource n in a resource pool are in a first relationship, and the first relationship is related to performing resource selection based on RSSI sorting; and
a resource pool corresponding to the resource pool configuration information comprises a first resource, a second resource, and a third resource, and at least one of the following is met: the first resource supports being selected when a priority of data of the first terminal is greater than a first threshold, wherein the first terminal sends data by using the NR access technology; when it is sensed that an RSRP according to an LTE SCI format 1 is greater than a second threshold and/or the priority is less than a third threshold, the first terminal is not capable of selecting the second resource; and the third resource always supports being selected.

33. The apparatus according to claim 25, wherein the first information comprises the resource pool configuration information, a resource pool corresponding to the resource pool configuration information comprises a first resource, a second resource, and a third resource, and when the communication module performs resource selection, at least one of the following is met:

if a priority of data of the first terminal is less than or equal to a first threshold, the first resource is not selected;
if the priority of the data of the first terminal is less than a third threshold and/or when it is sensed that an RSRP according to an LTE SCI format 1 is greater than a second threshold, the second resource is not selected;
when a CBR is less than a fourth threshold, the second resource and/or the third resource are/is preferentially selected; and
when the CBR is greater than a fifth threshold, selection of the first resource is supported.

34. A resource selection apparatus, applied to a second terminal and comprising:
a communication module, configured to perform resource selection based on received coordination information, wherein the second terminal supports an NR access technology, but does not support an LTE access technology, or the second terminal supports both an NR access technology and an LTE access technology.

35. The apparatus according to claim 34, wherein the communication module is configured to exclude a reserved resource of LTE or a non-recommended resource indicated in the coordination information.

36. The apparatus according to claim 34, wherein the communication module is configured to perform at least one of the following:

> selecting, by a MAC layer, a resource from an intersection set of a recommended resource in the coordination information and a candidate resource set reported by a physical layer; and if there is no intersection set between the recommended resource in the coordination information and the candidate resource set reported by the physical layer, or a quantity of intersection sets does not meet a first requirement, selecting a resource from the candidate resource set reported by the physical layer; and
> triggering resource reselection after receiving conflict indication information, wherein the conflict indication information is comprised in the coordination information.

37. A terminal, comprising a processor and a memory, wherein the memory stores a program or instructions capable of running on the processor, and the program or instructions is or are executed by the processor to implement the steps of the method according to any one of claims 1 to 24.

38. A readable storage medium, wherein a program or instructions is or are stored in the readable storage medium, and the program or the instructions is or are executed by a processor to implement the steps of the method according to any one of claims 1 to 24.

12

Network-side
device

11

11

Terminal

Terminal

FIG. 1

<u>200</u>

A first terminal performs resource selection based on first information,
where the first terminal supports an LTE access technology and/or an
NR access technology, and the first information includes at least one of
the following: second information, where the second information
includes LTE SCI sensing information of the LTE access technology or
resource reservation information obtained after LTE SCI sensing
information is processed; a coordination information request received
by the first terminal; and resource pool configuration information

~ S202

FIG. 2

$n-T_0$                                         $n-T$

Sensing window

$n-T_0$                                   $n-T_{proc,0}$   n

FIG. 3

FIG. 4

FIG. 5

Part A    Part B    Part C

FIG. 6

700

A second terminal performs resource selection based on received coordination information, where the second terminal supports an NR access technology, but does not support an LTE access technology, or the second terminal supports both an NR access technology and an LTE access technology

∿ S702

FIG. 7

Apparatus 800

Communication module ∿ 802

FIG. 8

Apparatus 900

Communication module ∿ 902

FIG. 9

1000

Communication device

1001 ∿ Processor ⟷ Memory ∿ 1002

FIG. 10

FIG. 11

## INTERNATIONAL SEARCH REPORT

| International application No. |
| --- |
| **PCT/CN2023/108899** |

### A. CLASSIFICATION OF SUBJECT MATTER

H04W72/12(2023.01)i; H04W72/04(2023.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT; VEN; ENTXTC; ENTXT; CNKI; 3GPP: 资源, 选择, 边链, 侧链, 副链, 预留, 保留, 协作, 协调, 共存, 干扰, 冲突, 重叠, 处理, 传输, 时间, 时长, 延迟, coexist, LTE, NR, collision, overlap, resource, selection, sidelink, SL, reserve, window, process, transmission, time, delay

### C. DOCUMENTS CONSIDERED TO BE RELEVANT

| Category* | Citation of document, with indication, where appropriate, of the relevant passages | Relevant to claim No. |
| --- | --- | --- |
| X | INTEL CORPORATION. "Sidelink Resource Allocation Design for NR V2X Communication" *3GPP TSG RAN WG1 Meeting #96bis R1-1904296*, 03 April 2019 (2019-04-03), sections 1-3 | 1-38 |
| X | CN 114765889 A (ASUSTEK COMPUTER INC.) 19 July 2022 (2022-07-19) description, paragraphs [0491]-[0712] | 1-38 |
| X | CN 112534936 A (LG ELECTRONICS INC.) 19 March 2021 (2021-03-19) description, paragraphs [0124]-[0294] | 1-38 |
| X | WO 2022071721 A1 (INNOVATIVE TECHNOLOGY LAB CO., LTD.) 07 April 2022 (2022-04-07) description, paragraphs [0048]-[0356] | 1-38 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **11 October 2023** | **23 October 2023** |

| Name and mailing address of the ISA/CN | Authorized officer |
| --- | --- |
| **China National Intellectual Property Administration (ISA/CN) China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/108899**

| Patent document cited in search report | | | Publication date (day/month/year) | Patent family member(s) | | | Publication date (day/month/year) |
|---|---|---|---|---|---|---|---|
| CN | 114765889 | A | 19 July 2022 | KR | 20220102583 | A | 20 July 2022 |
| | | | | US | 2022232626 | A1 | 21 July 2022 |
| | | | | EP | 4030839 | A1 | 20 July 2022 |
| CN | 112534936 | A | 19 March 2021 | WO | 2020032698 | A1 | 13 February 2020 |
| | | | | US | 2021204307 | A1 | 01 July 2021 |
| | | | | EP | 3813463 | A1 | 28 April 2021 |
| | | | | EP | 3813463 | A4 | 08 September 2021 |
| WO | 2022071721 | A1 | 07 April 2022 | KR | 20220043538 | A | 05 April 2022 |
| | | | | EP | 4224956 | A1 | 09 August 2023 |
| | | | | US | 2023239900 | A1 | 27 July 2023 |

Form PCT/ISA/210 (patent family annex) (July 2022)

**REFERENCES CITED IN THE DESCRIPTION**

**Patent documents cited in the description**

- CN 202210899927